# EUROPÄISCHE PATENTSCHRIFT

(11) **EP 0 368 967 B1**
(45) Veröffentlichungstag und Bekanntmachung des Hinweises auf die Patenterteilung: **24.02.1993**
(21) Anmeldenummer: 89905582.6
(22) Anmeldetag: 23.05.1989
(51) Int. Cl.: B21F 27/20, B23K 11/00

(54) **VERFAHREN UND ANLAGE ZUM HERSTELLEN ZWEILAGIGER GESCHWEISSTER GITTERKÖRPER**
PROCESS AND INSTALLATION FOR PRODUCING TWO-LAYERED WELDED NETWORK BODIES
PROCEDE ET DISPOSITIF POUR LA FABRICATION DE CORPS DE TREILLIS SOUDES A DEUX COUCHES

(30) Priorität: 26.05.1988 AT 1387/88
(43) Veröffentlichungstag der Anmeldung: 23.05.1990
(73) Patentinhaber: EVG Entwicklungs- u. Verwertungs- Gesellschaft m.b.H., A-8042 Raaba (AT)
(72) Erfinder: RITTER, Gerhard, A-8043 Graz (AT); RITTER, Klaus, A-8042 Graz (AT); SCHMIDT, Gerhard, A-8042 Graz (AT); LASSBACHER, Anton, A-8047 Graz (AT)
(74) Vertreter: Holzer, Walter, Dipl.-Ing.
(86) Internationale Anmeldenummer: AT8900051
(87) Internationale Veröffentlichungsnummer: WO8911358

(56) Entgegenhaltungen:
- EP-A- 0 069 108
- EP-A- 0 094 809
- DE-A- 3 148 939
- DE-A- 3 324 678
- US-A- 3 579 259
- US-A- 4 270 583
- US-A- 4 505 019

## Beschreibung

Die Erfindung betrifft ein Verfahren zum Herstellen zweilagiger, kreisbogenförmig gebogener, geschweißter Gitterkörper, die aus einander gegenüberliegenden Gittern aus einander kreuzenden und an den Kreuzungspunkten verschweißten Längs- und Querdrähten und aus die Gitter in einem vorgegebenen gegenseitigen Abstand haltenden, an jedem Ende mit einem Draht eines der beiden Gitter verschweißten, geraden Stegdrähten bestehen, bei welchem die Gitter gebogen und im Abstand zueinander angeordnet werden, worauf die Stegdrähte von der Gitteraußenseite her in den Zwischenraum zwischen den Gittern eingeführt und jeder Stegdraht mit den benachbarten Drähten der Gitter verschweißt wird. Die Erfindung bezieht sich ferner auf eine Anlage zur Durchführung des Verfahrens, gemäß Oberbegriff des Patentanspruchs 4.

Aus der EP-A-0 069 108 sind ein Verfahren und eine Anlage zum Herstellen ebener, zweilagiger, geschweißter Gitterkörper aus in einem Durchlaufverfahren endlos zugeführten, geradegerichteten Gitterbahnen bekannt, die über seitlich eingeschossene Stegdrähte miteinander zu einem Endlos-Gitterkörper verschweißt werden, von dem die ebenen Gitterkörper abtrennbar sind.

Aus der DE-OS 31 46 939 ist ein Verfahren zum Herstellen von Bewehrungskörpern für Betonbauteile bekannt, bei dem zylindrische Drahtkörbe zur Bewehrung von Stahlbetonrohren durch Stegdrähte miteinander verbunden werden. Die zylindrischen Drahtkörbe werden mit horizontaler Achse zunächst derart abgestützt, daß die Achsen der Drahtkörbe vorerst nicht koinzidieren und die Drahtkörbe somit nicht konzentrisch sind. Dann wird ein Abstandhalter waagrecht in Richtung des theoretischen Mittelpunktes des herzustellenden Bewehrungskörpers zugeführt und mit den Drähten der zylindrischen Drahtkörbe verschweißt. Nach entsprechender Drehung der Drahtkörbe nach oben werden nacheinander die folgenden Abstandhalter eingeschweißt. Dabei bewegen sich die beiden Drahtkörbe aus ihrer Ausgangslage, die durch einen gemeinsamen Berührungspunkt gekennzeichnet ist, immer weiter auseinander, bis die Konzentrizität der beiden Drahtkörbe erreicht ist. Bei dieser Herstellungsweise wird die Konzentrizität erst nach dem Einschweißen einer genügend großen Anzahl von Abstandhaltern erreicht, weil erst viele am Umfang verteilte Abstandhalter in der Lage sind, das Gewicht des nicht von den Rollen oder der Trommel abgestützten inneren bzw. äußeren Drahtkorbes zu tragen. Diese bekannte Verfahrensweise ist nicht nur relativ kompliziert, sondern hat vor allem den Nachteil, daß eine erhebliche Biegebeanspruchung der Abstandhalter sowie ihrer Schweißstellen an den Drahtkörben auftritt. Die bekannte Verfahrensweise ist überdies nur auf Drahtkörbe anwendbar, die aus Vollkreisen bestehen, nicht aber auf Gitterkörper aus Kreisringabschnitten, denn nur Drahtkörbe aus Vollkreisen sind so formstabil, daß sie ohne werkstückabhängige Vorrichtungen bearbeitet und durch einfaches Drehen nach dem Einschweißen der Abstandhalter in eine konzentrische Lage gebracht werden können.

Die Erfindung zielt darauf ab, ein Verfahren der einleitend angegebenen Art und eine Anlage zur Durchführung des Verfahrens zu schaffen, mit denen auf einfache Weise in einem kontinuierlichen Arbeitsgang zweilagige, kreisbogenförmig gebogene, geschweißte Gitterkörper hergestellt werden können, die aus Kreisringabschnitten bestehen und deren Abstandhalter spannungsfrei sind.

Das erfindungsgemäße Verfahren hat die Merkmale, daß zum Herstellen von Gitterkörpern in Form von Kreisringabschnitten die beiden Gitter in einem der gewünschten Dicke des Gitterkörpers entsprechenden gegenseitigen Abstand konzentrisch zueinander und in vertikaler Lage entlang von konzentrischen kreisförmigen Vorschubbahnen vorwärts bewegt werden, und daß nach dem vorzugsweise paarweise erfolgenden Anschweißen der Stegdrähte an die Gitter der fertige Gitterkörper von der Bahnaußenseite her entnommen wird.

Diese Verfahrensweise ermöglicht die einwandfreie Herstellung von Gitterkörpern aus Kreisringabschnitten mit spannungsfreien Abstandhaltern und Schweißstellen in einem durchgehenden Arbeitsgang. Erfindungsgemäß wird vor allem infolge des kreisförmigen Vorschubes, welchem die Gitter und Gitterkörpers in eindeutiger Weise unterliegen, die Konzentrizität der Gitter von Anfang an genau definiert.

Vorzugsweise werden die Gitter in Form von vorgefertigten Gittermatten zugeführt, die vor ihrer Anordnung an den kreisförmigen Vorschubbahnen entsprechend dem Bahnradius gebogen werden.

Gegenstand der Erfindung ist auch eine zur Durchführung des Verfahrens bestimmte Anlage mit Vorschubbahnen für einander gegenüberliegende Gitter, einer den Vorschubbahnen zugeordneten Gitterzuführstation, und mit einer seitlich der Vorschubbahnen angeordneten Stegdraht-Zuführstation mit Stegdraht-Zuführungen, deren Drahtvorschubwege quer über die Vorschubbahnen verlaufen, wobei jenseits der Vorschubbahnen, eingefluchtet mit den Drahtvorschubwegen, eine Schweißzangen aufweisende Schweißeinrichtung für die Verschweißung der freien Drahtenden mit dem einen Gitter und diesseits der Vorschubbahnen in Vorschubrichtung nachgeschaltet eine Schweißzangen aufweisende Schweißeinrichtung zum Anschweißen der Schnittenden der Stegdrähte an das andere Gitter vorgesehen sind; diese Anlage zeichnet sich erfindungsgemäß dadurch aus, daß die Vorschubbahnen entsprechend dem Biegeradius des herzustellenden Gitterkörpers kreisförmig gekrümmt sowie konzentrisch angeordnet sind und eine gemeinsame vertikale Achse aufweisen, daß die den Vorschubbahnen zugeordnete Gitterzuführstation mit Biegevorrichtungen für die beiden Gitter ausgestattet ist, daß die der Gitterzuführstation in Vorschubrichtung nachgeschaltete Stegdraht-Zuführstation an der Außenseite der Vorschubbahnen angeordnet ist, daß die Stegdraht-Zuführstation sowie die Schweißeinrichtungen an die Vorschubbahnen heran- und von diesen wegschwenkbar gelagert sind, und daß ebenfalls an der Außenseite der Vorschubbahnen eine Entnahmestation für die fertigen Gitterkörper vorgesehen ist.

Gemäß einer bevorzugten Ausführungsform der Erfindung sind zur Verarbeitung von in Form endloser Gitterbahnen zugeführten Gittern an den Vorschubbahnen Führungs- und Vorschubeinrichtungen für die Gitterbahnen und den Gitterkörper sowie vor der Entnahmestation eine Vorrichtung zum Ablängen der fertigen Gitterkörper vorgesehen.

Alternativ ist zur Verarbeitung von Gittern in Form von Gittermatten eine Gittermatten-Aufspannvorrichtung vorgesehen, die auf den Vorschubbahnen geführt und aus der Gitterzuführstation durch die Stegdraht-Zuführ- und Schweißstationen in die Gitterkörper-Entnahmestation bewegbar ist.

Die Erfindung und weitere Merkmale derselben werden nachfolgend an Ausführungsbeispielen unter Bezugnahme auf die Zeichnungen näher erläutert. Es zeigen:
Fig. 1A schematisch eine Anlage zum Herstellen gebogener geschweißter Gitterkörper gemäß der Erfindung in der Draufsicht und
Fig. 1B in einer Ansicht in Richtung der Pfeile B-B in Fig. 1A;
Fig. 2 eine abgewandelte Ausführungsform der erfindungsgemäßen Anlage in der Draufsicht;
Fig. 3 eine dritte Ausführungsform der Anlage in der Draufsicht;
Fig. 4 eine Zuführvorrichtung für Stegdraht in der Draufsicht;
Fig. 5 eine Seitenansicht der Stegdraht-Zuführstation der Anlage;
Fig. 6 einen Teil der Schweißstation der Vorrichtung gemäß der Erfindung;
Fig. 7 eine Mattenaufspannvorrichtung in der Draufsicht;
Fig. 8 ein Beispiel eines Vorschub- und Schweiß- schemas, und die
Fig. 9A - 9F Schnitte und Ansichten von gebogenen, geschweißten Gitterkörpern.

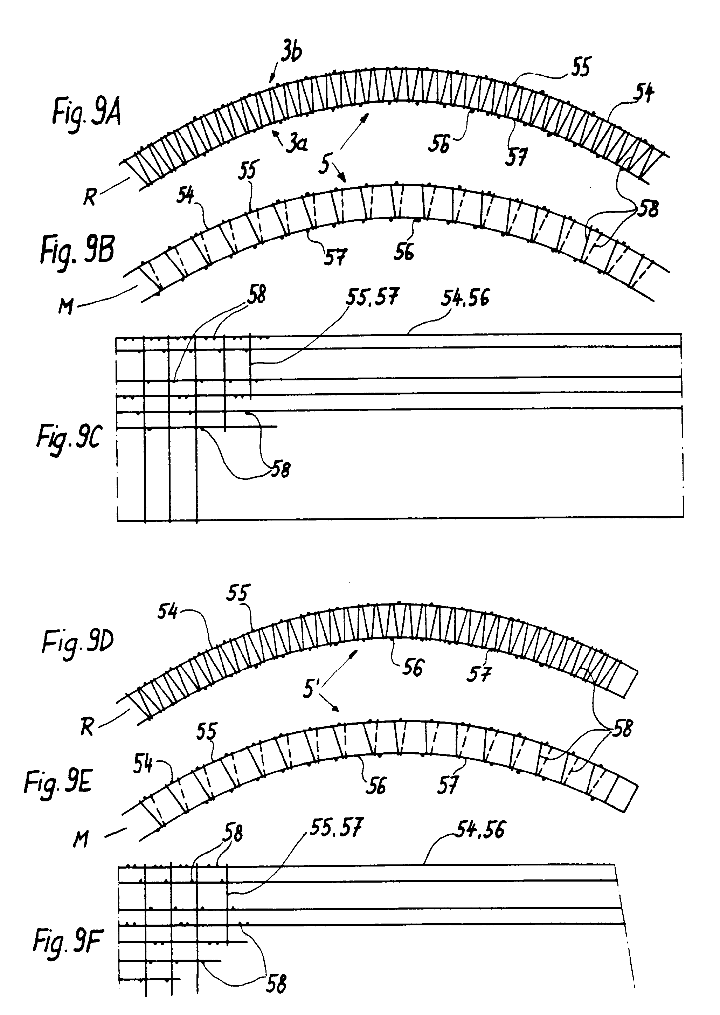

Der mit der erfindungsgemäßen Anlage hergestellte zweilagige gebogene geschweißte Gitterkörper 5, 5′ weist gemäß den Fig. 9A - 9F eine äußere Gittermatte 3b, bestehend aus Längsdrähten 54 und Querdrähten 55, eine innere Gittermatte 3a, bestehend aus Längsdrähten 56 und Querdrähten 57, und die beiden Gittermatten verbindende Stegdrähte 56 auf, die insbesondere zur Aussteifung des Gitterkörpers und als Scherkraftbewehrung dienen, Die Stegdrähte 56 können, wie in den Fig. 9C und 9F gezeigt ist, sowohl unterhalb als auch oberhalb der Längsdrähte 54, 56 an diesen angeschweißt sein.

In den Fig. 9A und 9B bzw. 9D und 9E sind jeweils zwei Schnitte durch die Gitterkörper 5, 5′ dargestellt, um verschiedene Kombinationsmöglichkeiten für die Anordnung von Stegdrähten 56 im Gitterkörper zu zeigen. In den Schnitten nach den Fig. 9A und 9D ist jeweils eine vollständige Bestückung mit beispielsweise spitzwinkelig zueinander angeordneten Stegdrähten 56 gezeigt, wie sie aus Gründen der optimalen Versteifung des Gitterkörpers zweckmäßig am oberen und unteren Rand desselben Anwendung findet. Die Schnitte nach den Fig. 9B und 9E sind jeweils durch einen mittleren Abschnitt des Gitterkörpers gelegt und zeigen weitere mögliche Kombinationen für die Anordnung von Stegdrähten, wobei strichliert jeweils eine tiefer oder eine höher liegende Lage von Stegdrähten angedeutet ist.

Das Verfahren und die Anlage gemäß der Erfindung ermöglichen die Herstellung von Gitterkörpern für unterschiedliche Anwendungsfälle mit jeder beliebigen Kombination von Stegdrähten; dies gilt insbesondere für ihre Anzahl pro Längsdrahtlage, ihre relative Anordnung in den verschiedenen Lagen, ihre Richtung im Gitterkörper relativ zu den Längsdrähten, sowie ihre Durchmesser, die ebenfalls unterschiedlich sein können. Hiebei sind, wie in den Ansichten nach den Fig. 9C und 9F dargestellt ist, innerhalb einer Längsdrahtlage auch unterschiedliche Kombinationen von Stegdrähten möglich.

In den Fig. 9D bis 9F ist außerdem zu erkennen, daß ein äußerer Rand des Gitterkörpers 5′ abgeschrägt ausgebildet sein kann.

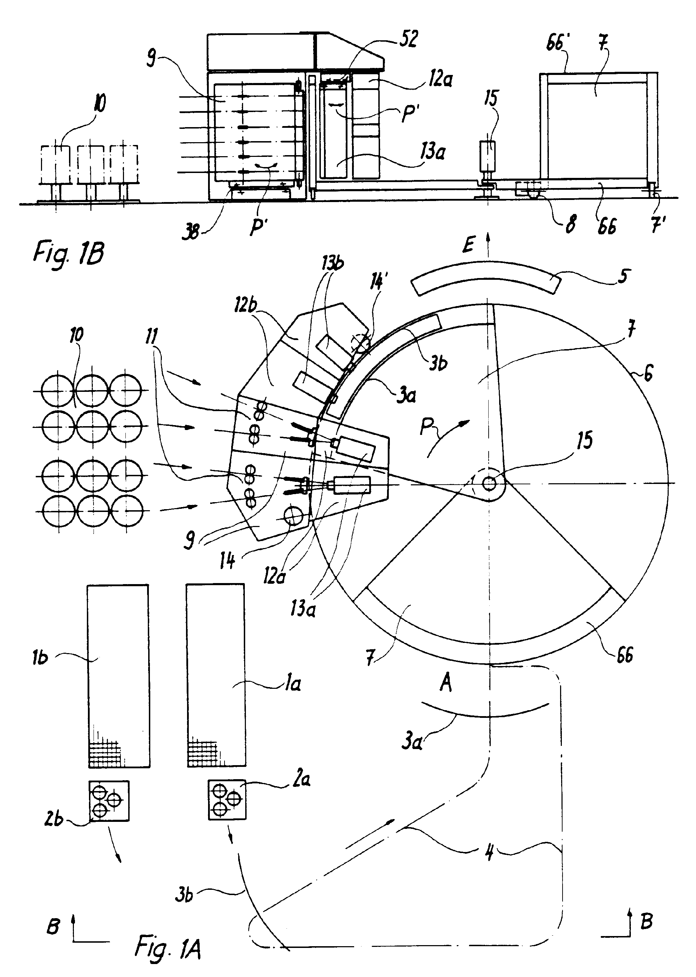

Eine erfindungsgemäße Anlage zum Herstellen des kreisbogenförmig gebogenen Gitterkörpers 5 ist in den Fig. 1A und 1B gezeigt. Eine innere, zunächst ebene Gittermatte 3a, die aus miteinander verschweißten Längsdrähten 56 und Querdrähten 57 besteht, wird einem Nattenmagazin 1a entnommen und in einer Biegevorrichtung 2a in die gewünschte gebogene Form gebracht. Die Biegevorrichtung 2a kann beispielsweise aus drei mittels einer Kette verbundenen, antreibbaren Rollen bestehen, deren Abstand zueinander anstellbar ist, wodurch der Krümmungsradius der Längsdrähte der Gittermatte, und somit auch des herzustellenden Gitterkörpers, in gewissen Grenzen einstellbar ist. Bei Verwendung von wenig biegesteifen Gittermatten mit beispielsweise dünnen Längsdrähten, die ohne großen Kraftaufwand leicht gebogen werden können, sowie bei sehr großen Krümmungsradien des herzustellenden Gitterkörpers, kann die Biegevorrichtung gegebenenfalls weggelassen werden.

Auf einer Mattentransportbahn 4 wird die innere Gittermatte 3a einer in der Gitterzuführstation A befindlichen Mattenaufspannvorrichtung 7 zugeführt und, wie später beschrieben wird, in dieser senkrecht stehend fixiert. In gleicher Weise wird eine äußere Gittermatte 3b, die ebenfalls aus miteinander verschweißten Längsdrähten 54 und Querdrähten 55 besteht, sich aber in ihrem Aufbau von der inneren Gittermatte 3a unterscheiden kann, einem weiteren Mattenmagazin Ib entnommen und erhält in der zugehörigen Biegevorrichtung 2b die notwendige Krümmung ihrer Längsdrähte. Die gebogene Gittermatte 3b wird auf der Mattentransportbahn 4 der Mattenaufspannvorrichtung 7 zugeführt und ebenfalls senkrecht stehend in dieser fixiert.

Die Mattenaufspannvorrichtung 7 hat einen in der Draufsicht kreissektorförmigen Rahmen, der mittels Rädern 7′ auf einer kreisförmigen Laufbahn 6 mit vertikaler Achse verfahrbar angeordnet und in der Laufbahnmitte 15 drehbar gelagert ist. In der Laufbahnmitte befinden sich außerdem drehbare Strom- und Steuerleitungen sowie Versorgungsleitungen für hydraulisch und pneumatisch betätigbare Elemente der Mattenaufspannvorrichtung 7.

Nach dem vollständigen Beladen der Mattenaufspannvorrichtung 7 fährt diese mit Hilfe einer an deren Rahmen montierten Antriebseinrichtung 8 auf der konzentrische kreisförmige Vorschubbahnen für die Matten definierenden Laufbahn 6 von der Gitterzuführstation A in Richtung des Pfeiles P so weit zwischen eine erste, außerhalb der Laufbahn 6 angeordnete Stegdraht-Zuführstation 9 und eine dieser genau gegenüber innerhalb der Laufbahn 6 liegende innere Schweißstation 12a, bis eine Einschießposition für eine erste vertikale Reihe von Stegdrähten erreicht ist.

An dieser Stelle wird die Antriebseinrichtung 8 stillgesetzt und der weitere taktweise Vorschub der Mattenaufspannvorrichtung 7 wird nunmehr von einer Positionierantriebseinrichtung 14 übernommen, die im Einlaufbereich der ersten Stegdraht-Zuführstation 9 vorgesehen ist und ein in radialer Richtung verschiebbares, mit einer Zahnstange der Mattenaufspannvorrichtung 7 in Eingriff versetzbares Antriebsritzel aufweist.

Von Vorratsspulen 10 werden, z.B. über einen Spulen- oder Haspelablauf, die Stegdrähte 58 mittels Zuführvorrichtungen 11, die je im wesentlichen aus einer Rolleneinschießeinrichtung und einer Schere besteht, wie dies später noch erläutert wird, in entsprechende Positionen an den Längsdrähten 56 der inneren Gittermatte 3a eingeschossen, abgelängt und in der inneren Schweißeinrichtung 13a mit den Längsdrähten 56 der inneren Gittermatte 3a verschweißt.

Die Stegdraht-Zuführstation 9, in der Zuführvorrichtungen 11 in vertikaler Richtung entsprechend der maximalen Anzahl der einzuschießenden Stegdrahtlagen angeordnet sind, und die innere Schweißeinrichtung 13a, in der Schweißzangen 42 in vertikaler Richtung in mindestens gleicher Anzahl angeordnet sind, führen während des Einschießvorganges der Stegdrähte 58 die in der Ansicht durch Pfeile P′ dargestellte Schwenkbewegung in Richtung zu den Gittermatten 3a, 3b aus. Die Schwenkbewegung der Stegdraht-Zuführstation 9 wird durch eine Schwenkeinrichtung 38 und die synchrone Schwenkbewegung der inneren Schweißeinrichtung 13a durch eine Schwenkeinrichtung 52 bewirkt. Nach Beendigung der Schweißvorgänge schwenken die Stegdraht-Zuführstation 9 sowie die innere Schweißeinrichtung 13a in ihre Ausgangslage zurück.

Entsprechend der gewünschten Anordnung der Stegdränte erfolgt nun der Vorschub der Mattenaufspannvorrichtung 7 zur nächsten Stegdraht-Zuführstation 9 und der dieser gegenüberliegenden inneren Schweißstation 12a, wo erneut unter Ausführung der entsprechenden Schwenkbewegungen der Drahtzuführstation 9 und der Schweißeinrichtung 13a Stegdrähte eingeschossen, abgelängt und an der inneren Gittermatte 3a angeschweißt werden.

Die nächsten Vorschubschritte bringen die Mattenaufspannvorrichtung 7 in nachfolgende, an der Außenseite der Laufbahn 6 angeordnete äußere Schweißstationen 12b mit entsprechenden äußeren Schweißeinrichtungen 13b. In diesen Schweißeinrichtungen 13b, die ebenso wie die inneren Schweißeinrichtungen 13a mehrere vertikal angeordnete Schweißzangen 42 enthalten und ebenso eine Schwenkbewegung in Richtung zu den Gittermatten 3b in die Schweißposition durchführen, werden die Stegdrähte 58 auch mit den Längsdrähten 54 der äußeren Gittermatte 3b verschweißt. Nach Beendigung der Schweißvorgänge schwenken die äußeren Schweißeinrichtungen 13b ebenfalls wieder in ihre Ausgangslage zurück.

Es versteht sich, daß während dieser Vorschubschritte erneut Stegdrähte mittels der Vorrichtungen 11 zugeführt und mittels der inneren Schweißeinrichtungen 13a angeschweißt werden können.

Entsprechend der vorbestimmten Anordnung der Stegdrähte erfolgen weitere, taktweise Vorschübe der Mattenaufspannvorrichtung 7, so daß an den jeweiligen Positionen Stegdrähte 58 eingeschossen und innen sowie außen angeschweißt werden, bis der Gitterkörper 5 vollständig mit Stegdrähten bestückt ist. In Abhängigkeit von der Bogenlänge des äußeren Rahmenteiles 66 der Mattenaufspannvorrichtung 7 und von den Abmessungen der Schweißstationen 12a, 12b übernimmt hiebei eine am Ende der äußeren Schweißstationen 12b angeordnete Positionierantriebseinrichtung 14′ den weiteren Vorschub der Mattenaufspannvorrichtung 7.

Sobald der Gitterkörper 5 fertig ist, fährt die Mattenaufspannvorrichtung 7 unter der Wirkung der Antriebseinrichtung 8 in eine Entnahmestation E, in welcher der fertige Gitterkörper 5 entnommen und einer Weiterverarbeitung oder Stapelung zugeführt wird. Die leere Mattenaufspannvorrichtung 7 fährt anschließend in die Gitterzuführstation A weiter und der erläuterte Arbeitszyklus beginnt erneut.

Die Stegdraht-Zuführstation 9 und die innere und äußere Schweißstation 12a, 12b mit den entsprechenden Schweißeinrichtungen 13a, 13b können, wie in Fig. 1 beispielsweise dargestellt ist, jeweils in doppelter Ausführung vorhanden sein, um mehrere Arbeitsgänge gleichzeitig ausführen zu können und somit die Fertigungsgeschwindigkeit der Schweißanlage zu erhöhen. Hiebei sind alle Stegdraht-Zuführstationen 9 und alle Schweißeinrichtungen 13a, 13b einzeln ansteuerbar und nur die Bewegungsabläufe der Stegdraht-Zuführstationen 9 mit den zugeordneten gegenüberliegenden inneren Schweißeinrichtungen 13a sind aufeinander abgestimmt.

Selbstverständlich ist es auch möglich, die vorgenannten Stationen 9 und 12a, 12b in beliebiger Anzahl vorzusehen, wobei die maximal mögliche Anzahl im Prinzip nur durch den Platzbedarf für die einzelnen Stationen und für den Verfahrensablauf, wie den Platzbedarf für das Zuführen der Gitter und die Entnahme des Gitterkörpers beschränkt ist.

Die einzelnen Stegdraht-Zuführstationen 9 sowie die inneren und äußeren Schweißstationen 12a, 12b sind relativ zueinander und in Richtung zur Laufbahn 6 verschiebbar auf einer nicht dargestellten Grundplatte aufgebaut, damit diese Stationen in ihrer Position zueinander und zur Laufbahn hin der Geometrie der herzustellenden Gitterkörper angepaßt werden können.

Zur Erhöhung der Produktivität der Anlage können, wie ebenfalls in Fig. 1 dargestellt ist, mehrere gleichartige Mattenaufspannvorrichtungen 7 zum Einsatz gelangen, wobei alle Mattenaufspannvorrichtungen die einzelnen Verfahrensschritte, wie das Beladen mit Gittermatten, das Einschießen und Verschweißen der Stegdrähte und die Entnahme des fertigen Gitterkörpers nacheinander ausführen.

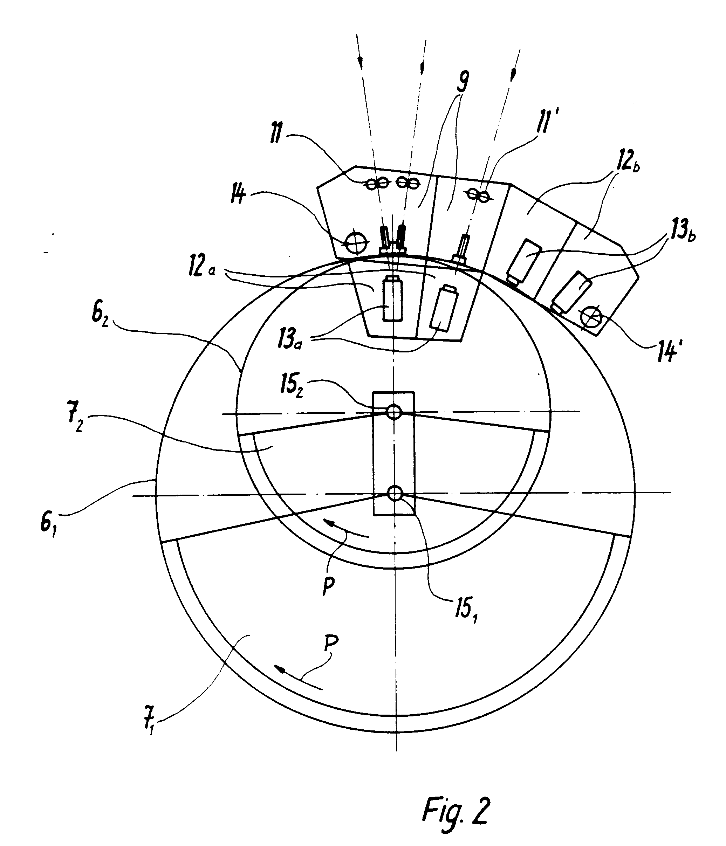

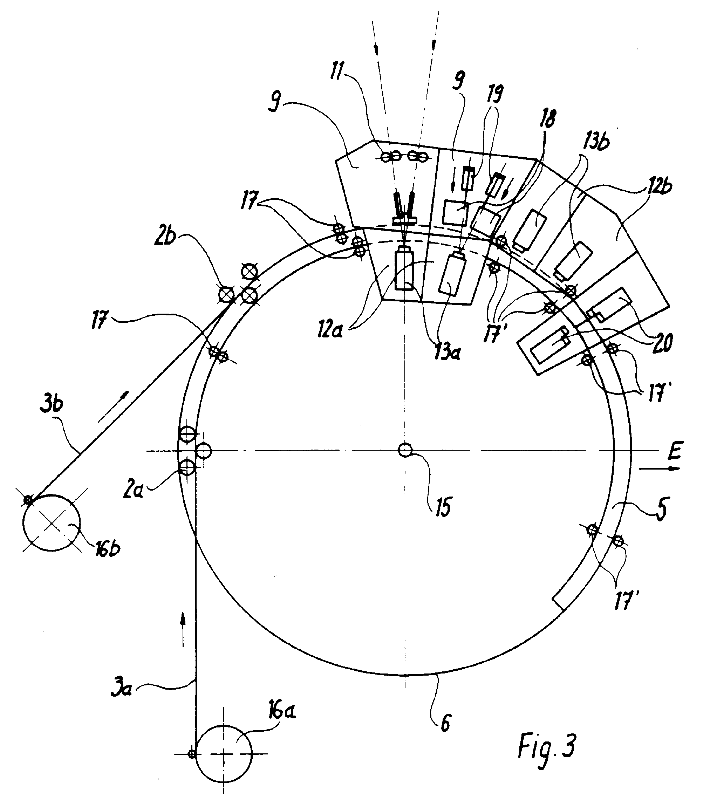

In Fig. 2 ist ein weiteres Ausführungsbeispiel einer Anlage gemäß der Erfindung gezeigt, die auch mit den in den Fig. 1 und 3 dargestellten Ausführungsbeispielen erfindungsgemäßer Anlagen kombiniert werden kann. Zur Herstellung von Gitterkörpern 5 mit unterschiedlichen Krümmungsradien, wie sie beispielsweise für die Bewehrung unterschiedlich großer Tunnelröhren erforderlich sind, werden z.B. zwei Laufbahnen 6₁ und 6₂ mit vertikaler Achse vorgesehen, wobei die Krümmungsradien der Laufbahnen und die Abmessungen der Mattenaufspannvorrichtungen den Krümmungsradien der Gitterkörper angepaßt werden. Da die Stegdraht-Zuführstationen 9 und die Schweißstationen 12a, 12b möglichst ortsfest aufgebaut sein sollen, werden die Mittelpunkte der im Radius unterschiedlichen Laufbahnen 6₁, 6₂ und damit die Drehpunkte 15₁, 15₂ der Mattenaufspannvorrichtung 7₁, 7₂ so gegeneinander verschoben, daß sich die Laufbahnen 6₁, 6₂ in der ersten Schweißposition, die sich zwischen der ersten Stegdraht-Zuführstation 9 und der ersten inneren Schweißstation 12a befindet, berühren. Zum Herstellen von Gitterkörpern 5 mit kleinerem Krümmungsradius wird der für eine Mattenaufspannvorrichtung 7₁ mit großem Radius gültige Drehpunkt 15₁ in Richtung auf die erste Schweißposition verlagert, so daß sich ein Drehpunkt 15₂ für eine Mattenaufspannvorrichtung 7₂ mit kleinerem Radius ergibt. Um den Bewegungsablauf nicht zu stören, wird die Mattenaufspannvorrichtung 7₁ entfernt und nur die Mattenaufspannvorrichtung 7₂ mit der zugehörigen Laufbahn 6₂ mit dem kleineren Krümmungsradius verwendet.

Falls erforderlich, werden außerdem die zweite Stegdraht-Zuführstation 9 und die Schweißstationen 12a, 12b in Richtung zur Laufbahn 6₂ hin verschoben.

Des weiteren ist in Fig. 2 in der zweiten Stegdraht-Zuführstation 9 ein weiteres Ausführungsbeispiel einer Zuführeinrichtung 11′ dargestellt, mit der nur einzelne Versteifungsdrähte zugeführt werden können.

Die Herstellung der Gitterkörper kann gemäß einer weiteren in Fig. 3 gezeigten Ausführungsform der Erfindung, in einem kontinuierlichen Herstellungsverfahren erfolgen. Hiebei werden von einer Vorratsrolle 16a eine endlose innere Gitterbahn 3a und von einer weiteren Vorratsrolle 16b eine endlose äußere Gitterbahn 3b von außen her und tangential an die Laufbahn 6 und an entsprechende Biegestationen 2a und 2b herangeführt, die sich bei diesem Ausführungsbeispiel unmittelbar im Bereich der Laufbahn 6 befinden. Die Biegestationen 2a, 2b sind entsprechend angetrieben und übernehmen taktweise den Abzug der Gitterbahnen von den Vorratsrollen 16a, 16b und den Vorschub der nunmehr gebogenen Gittermatten 3a, 3b. Die Führung der Gittermatten 3a, 3b längs der Laufbahn 6 erfolgt mittels zusätzlicher Führungsrollen 17, die beiderseits entlang der Vorschubbahn der inneren und äußeren Gittermatten in Vorschubrichtung vor den Schweißstationen 12a angeordnet sind, bzw. mittels Führungsrollen 17′, die jeweils beiderseits außerhalb des Gitterkörpers entlang der Laufbahn innerhalb und in Vorschubrichtung hinter den Schweißstationen 12b angeordnet sind. Die Führungsrollen 17′, die hinter den Schweißstationen 12b liegen, können mit einem zusätzlichen, nicht dargestellten Vorschubantrieb versehen werden, um den mittels einer Schere 20 vom Materialstrang abgetrennten fertigen Gitterkörper 5 beschleunigt der Entnahmestation E zuzuführen.

In Fig. 3 ist eine weitere Ausführungsform einer Zuführvorrichtung für abgelängte Stegdrähte dargestellt, wobei diese Stegdraht-Zuführvorrichtung auch mit den in den Fig. 1 und 2 dargestellten erfindungsgemäßen Anlagen kombiniert werden kann. Mit Hilfe dieser Zuführvorrichtung werden bereits abgelängte Versteifungsdrähte 58 aus den Vorratsmagazinen 18 mittels Stegdrahtzubringern 19 in die entsprechende Position in die Gitterkörper eingeschossen.

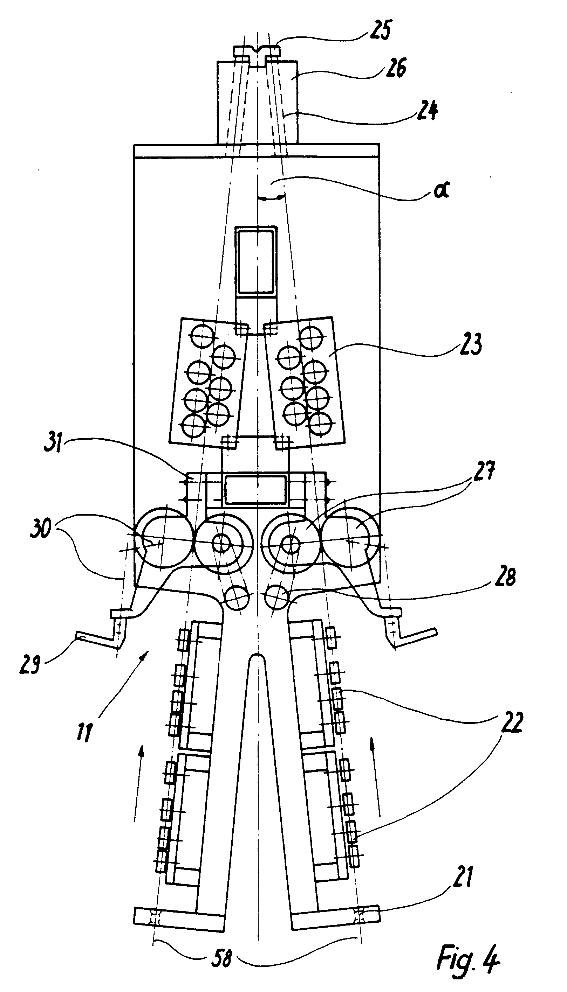

In Fig. 4 ist eine Ausführungsform einer erfindungsgemäßen Vorrichtung 11 zum gleichzeitigen Zuführen von zwei unter spitzem Winkel konvergent verlaufenden Stegdrähten dargestellt. Diese Vorrichtung ist auch zum Zuführen nur eines einzelnen Stegdrahtes geeignet, wenn beispielsweise nur ein Zuführkanal benutzt wird.

Die Stegdrähte 58 treten über Führungsdüsen 21 in die Zuführeinrichtung 11 ein, durchlaufen vertikal angeordnete Richtrollen 22 und horizontal angeordnete Richtrollen 23, in denen die Stegdrähte 58 geradegerichtet werden, und gelangen anschließend in Schneiddüsen 24, die sich zusammen mit dem Schneidmesser 25 auf einem Schneidbalken 26 befinden. Der Vorschub der Stegdrähte 58 erfolgt mittels zwischen den Richtrollen 22 und 23 angeordneten Vorschubrädern 27, die mittels eines Spannhebels 29 und eines Exzenterhebels 30 an die Stegdrähte 58 angepreßt werden, wobei durch geeignete Ausbildung der Laufflächen, wie z.B. Verzahnung oder Rändelung, ein besserer Reibungsschluß erzielt werden kann.

Die Länge des einzuschießenden Stegdrahtes wird mit Hilfe eines beispielsweise mittels Zahnriemen mit einer Welle 33 der Vorschubräder 27 verbundenen Meßrades 28 und eines Meßwertgebers 35 gemessen. Nach Erreichen der Soll-Länge wird der Vorschub gestoppt, die Schweißzangen 42 der inneren Schweißeinrichtungen 13a werden geschlossen, um den Stegdraht 58 am Längsdraht 56 der inneren Gittermatte 3a zu fixieren und mittels der vertikal am Schneidbalken 26 beweglichen Schneidmesser 25 wird der Stegdraht 58 vom Materialstrang abgetrennt.

In Fig. 4 ist der Einschießwinkel α der Stegdrähte eingezeichnet, definiert als Winkel zwischen der jeweiligen Einschießbahn der Stegdrähte und der jeweiligen Normalen auf die Tangentialebene an die innere gebogene Gittermatte am Ort der jeweiligen Schweißpositionen an den Längsdrähten 56 der inneren Gittermatte.

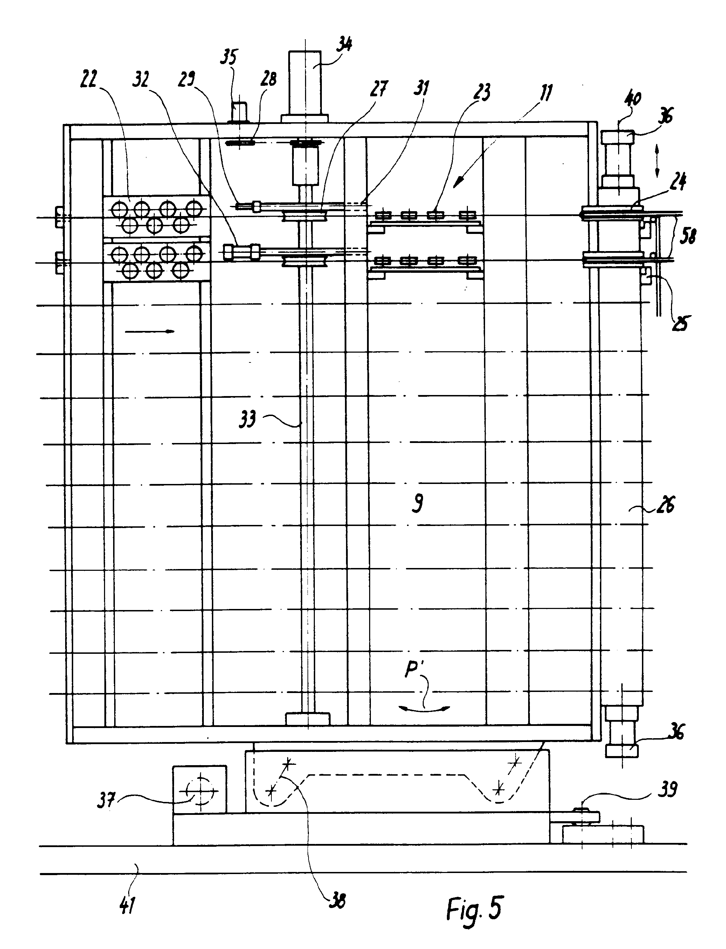

Wie aus Fig. 5 zu ersehen ist, sind in der Stegdraht-Zuführstation 9 mehrere, je mittels einer Klemmeinrichtung 31 höhenverstellbare und feststellbare Zuführeinrichtungen 11 bzw. 11′ für Stegdrähte in einer Reihe vertikal angeordnet, wobei die Vorschubräder 27 jeder einzelnen Zuführeinrichtung höhenverstellbar und festklemmbar auf der gemeinsamen, durch eine Antriebseinrichtung 34 antreibbaren Welle 33 angeordnet sind.

Die Spannhebel 29 am Exzenterhebel 30 können beispielsweise durch hydraulisch betätigbare Spannzylinder 32 ersetzt werden, um das Einschießen bzw. Nichteinschießen der Stegdrähte 58 zu steuern. Die Schneidbewegung der Schneidmesser 25 wird von zwei abwechselnd ansteuerbaren Schneidzylindern 36 durchgeführt,

Die bereits erwähnte Schwenkbewegung der Drahtzuführstation 9 (Pfeil P′), die gleichzeitig mit dem Vorschub des Stegdrahtes 58 in Richtung auf die Gittermatten 3a, 3b und nach Beendigung der Schweiß- und Schneidvorgänge wieder zurück in die Ausgangslage erfolgt, wird mittels eines Kurbel-Schwenkantriebes 37 und einer aus Lenkern gebildeten Schwenkeinrichtung 38 ausgeführt.

Zwecks Anderung der in Fig. 4 angegebenen Einschießwinkel α der Stegdrähte kann die Drahtzuführstation 9 um die Schwenkachse 39 mit einer Grundplatte 41 schwenkbar verbunden sein. Falls erforderlich, kann eine Veränderung der Einschießwinkel α auch durch Schwenken des Schneidbalkens 26 um seine Achse 40 erfolgen.

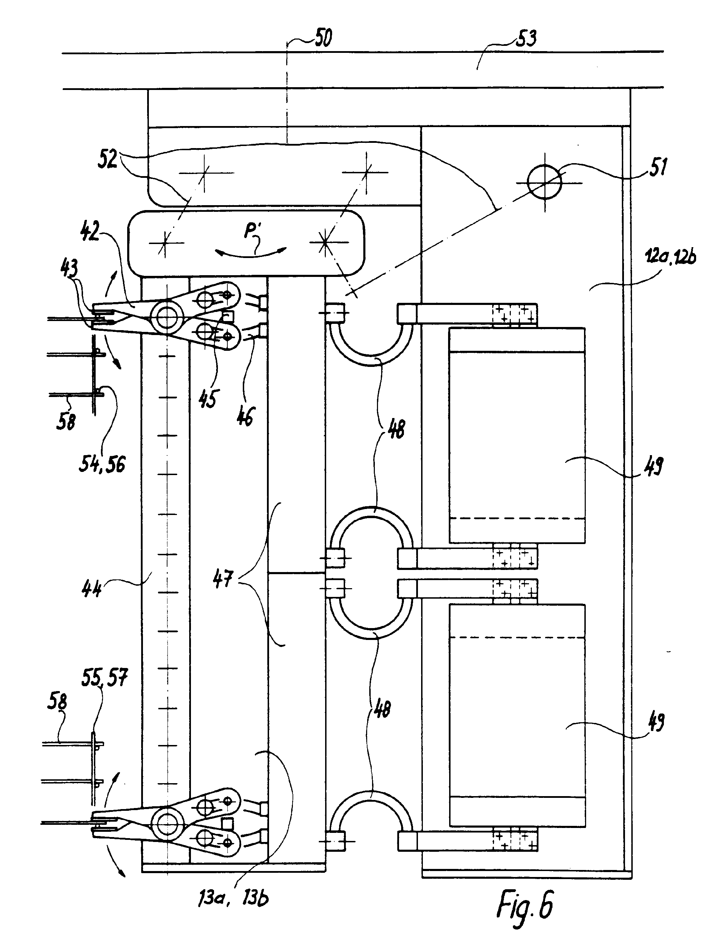

In Fig. 6 ist ein Ausführungsbeispiel für die Schweißstationen 12a, 12b dargestellt. Mehrere Schweißzangen 42 mit Schweißelektroden 43 sind höhenverstellbar und feststellbar auf einem Schweißzangenständer 44 angeordnet. Die Schweißzangen 42 werden mittels Schweißzylindern 45 betätigt, wobei der Schweißdruck den Durchmessern der zu verschweißenden Drähte angepaßt werden kann.

Die Zufuhr des erforderlichen, ebenfalls den Durchmessern der zu verschweißenden Drähte angepaßten Schweißstromes von Schweißtransformatoren 49 zu Sammelschienen 47 erfolgt über Strombänder 48, welche die Schwenkbewegung der Schweißeinrichtung 13a, 13b gestatten, die im wesentlichen aus dem Schweißzangenständer 44, den Schweißzangen 42 und den Sammelschienen 47 besteht. Von den Sammelschienen 47 erfolgt die Stromeinspeisung zu den Stromzangen 42 über flexible Stromkabel 46.

Die Anzahl und die Schaltung der Schweißtransformatoren 49 und der Sammelschienen 47 sowie anschließend der Schweißzangen 42 wird entsprechend der Anzahl und Querschnitte der zu verschweißenden Drähte in den unterschiedlichen Kombinationen 54, 58 und 56, 58 gewählt.

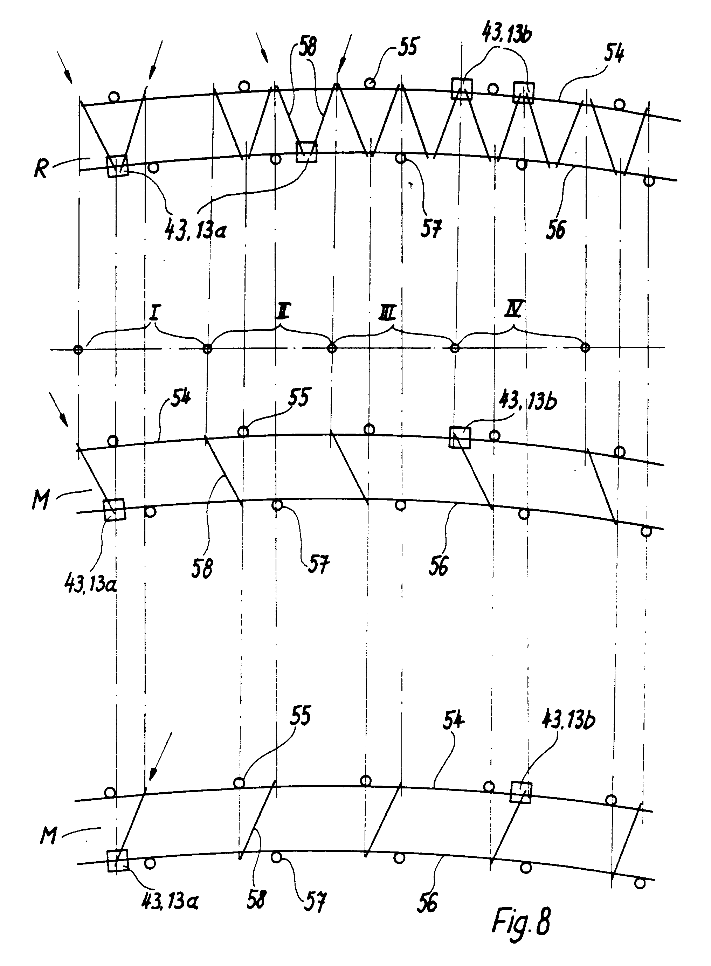

Die Schweißelektroden 43 sind vorzugsweise großflächig ausgebildet. Dadurch können, wie dies im Vorschub- und Schweißschema gemäß Fig. 8 angedeutet ist, auch mehrere Versteifungsdrähte 58 gleichzeitig mit den entsprechenden Längsdrähten 54, 56 verschweißt und gegebenenfalls geringe Abweichungen in der Positionierung der Stegdrähte 58, beispielsweise bedingt durch unterschiedliche Einschußwinkel α, toleriert werden.

Wie bereits erwähnt, führt die Schweißeinrichtung 13a synchron mit dem Einschießvorschub der Stegdrähte und die Schweißeinrichtung 13b mittels eines Kurbel-Schwenkantriebes 51 und einer durch Lenker gebildeten Schwenkeinrichtung 52 eine Schwenkbewegung (Pfeil P′) in die Schweißposition und nach erfolgter Schweißung und Öffnen der Schweißzangen 42 eine entgegengesetzte Schwenkbewegung zurück in die Ausgangslage aus.

Zwecks Änderung der Schweißposition auf den Längsdrähten, bedingt durch allfällige Änderung des Einschießwinkels α der Stegdrähte, sind die Schweißstationen 12a, 12b um eine Schwenkachse 50 an einem Grundrahmen 53 schwenkbar montiert.

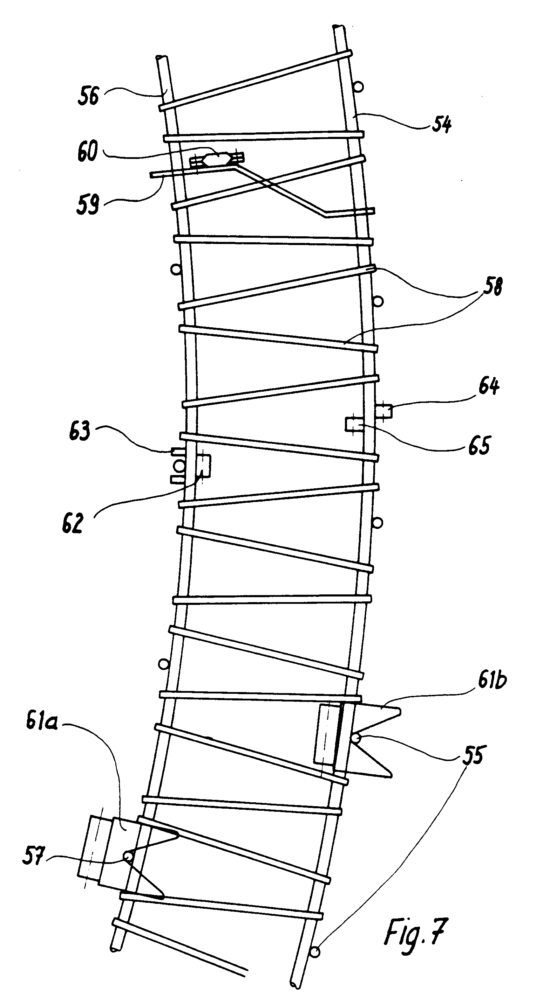

Bei der Darstellung der Mattenaufspannvorrichtung in Fig. 7 sind der Drehpunkt 15, der Grundrahmen und der Antrieb 8 weggelassen und nur die für die Positionierung und Fixierung der Gittermatten 3a, 3b innerhalb der Mattenaufspannvorrichtung 7 notwendigen Elemente auf dem unteren, bogenförmigen Teil 66 der Mattenaufspannvorrichtung 7 dargestellt.

In der Gitterzuführstation A der Schweißanlage werden zum Beladen der Mattenaufspannvorrichtung mit Gittermatten zunächst in dieser mehrfach vorhandene Mattenpositioniereinrichtungen 59 für die Längsdrähte 54, 56 längs Führungen 60 mittels nicht dargestellter Betätigungselemente, wie z.B. Pneumatikzylindern, und innere, ebenfalls mehrfach vorhandenen Mattenzentrierungen 61a für die Querdrähte 57 durch eine Schwenkbewegung in ihre Arbeitsstellung gebracht, wodurch die innere Gittermatte mit ihren Längsdrähten 56 und ihren Querdrähten 57 in ihrer Lage in der Mattenaufspannvorrichtung 7 genau bestimmt ist.

Nach dem Einlegen der inneren Gittermatte 56, 57 wird diese mittels ebenfalls mehrfach vorhandener, schwenkbarer, innerer Spannzangen 62 gegen gegenüberliegende Fixieranschläge 63 der Spannzangen festgeklemmt. Sobald die Spannzangen 62 geschlossen sind, öffnen innere Mattenzentrierungen 61a, und ebenfalls mehrfach vorhandene äußere Mattenzentrierungen 61b schwenken in ihre Arbeitsstellung, wodurch nun zusammen mit den Mattenpositioniereinrichtungen 59 auch die Lage der äußeren Gittermatte mit ihren Längsdrähten 54 und ihren Querdrähten 55 in der Mattenaufspannvorrichtung 7 genau bestimmt ist.

Nach dem Einlegen der äußeren Gittermatte 54, 55 erfolgt die Fixierung derselben durch Einschwenken von mehrfach vorhandenen, äußeren Spannzangen 64 gegen gegenüberliegende, ebenfalls einschwenkbare äußere Mattenanschläge 65.

Sobald die Spannzangen 64, 65 geschlossen sind, öffnen die äußeren Mattenzentrierungen 61b wieder und die nun nicht mehr notwendigen Mattenpositioniereinrichtungen 59 werden in ihre Ausgangslage abgesenkt.

Das Schließen der Spannzangen 62, 64, 65 erfolgt gruppenweise, wobei vorzugsweise an den Rändern der Gittermatten begonnen wird, so daß ein Verspannen der Gittermatten vermieden wird.

Die Anzahl der Mattenpositioniereinrichtungen 59, der Mattenzentrierungen 61a, 61b, sowie der inneren Spannzangen 62 mit den Fixieranschlägen 63 und der äußeren Spannzangen 64, 65 hängt von der Länge und Eigensteifigkeit der inneren und äußeren Gittermatten ab.

Die Spannzangen 62, 64, 65 sowie die Fixieranschläge 63 sind zwecks Fixierung der beiden obersten Längsdrähte 54, 56 der Gittermatten auch auf einem oberen, bogenförmigen Teil 66′ der Mattenaufspannvorrichtung 7 vorhanden und werden synchron mit den entsprechenden Elementen am unteren bogenförmigen Teil 66 der Mattenaufspannvorrichtung angesteuert und betätigt.

In der Entnahmestation E der Schweißanlage wird der fertige Gitterkörper 5 mit Hilfe von Greifvorrichtungen erfaßt, die von der Außenseite der Laufbahn 6 herausgebracht werden, und die Spannzangen 62, 64, 65 öffnen sich und geben den Gitterkörper zum Abtransport frei.

Zwecks Anpassung der einzelnen Elemente der Mattenaufspannvorrichtung an die unterschiedliche Geometrie verschiedener herzustellender Gitterkörper, insbesondere der unterschiedlichen Teilungen der Längs- und Querdrähte der Gittermatten, sind die entsprechenden Elemente der Mattenaufspannvorrichtung feststellbar, falls erforderlich in vertikaler Richtung höhenverstellbar und horizontal verschiebbar auf dem unteren und oberen bogenförmigen Teil 66 bzw. 66′ der Mattenaufspannvorrichtung 7 angebracht.

Die Bogenlänge der bogenförmigen Teile 66, 66′ der Mattenaufspannvorrichtung 7 kann den herzustellenden Gitterkörpern angepaßt sein, es besteht jedoch auch die Möglichkeit, unter entsprechender Positionierung der Positionier-, Zentrier-, Spann- und Fixierelemente 59, 61a, 61b, 62, 63, 64, 65 in der Mattenaufspannvorrichtung 7 kürzere Gittermatten als der Bogenlänge der bogenförmigen teile 66, 66′ entspricht, wie dies beispielsweise in Fig. 1 gezeigt ist, oder auch mehr als ein Gittermattenpaar 3a, 3b anzuordnen.

Im Vorschub- und Schweißschema gemäß Fig. 8 ist in perspektivischer Darstellung ein Ausführungsbeispiel für die Verschweißung der Stegdrähte am oberen Rand R eines Gitterkörpers sowie in zwei mittleren Lagen M dieses Gitterkörpers dargestellt. In dieser schematischen Darstellung sind die Schweißelektroden 43 in quadratischer Form angedeutet, sie können jedoch jede beliebige Form haben, die geeignet ist, mehrere Stegdrähte 58 gleichzeitig mit den Längsdrähten 54, 56 zu verschweißen.

Des weiteren sind die verschiedenen Vorschub- und Schweißtakte I-IV der Schweißanlage dargestellt. Die eingezeichneten Pfeile stellen die Einschießrichtungen der Stegdrähte an den entsprechenden Positionen dar.

Es versteht sich, daß die Schweißanlage im hinblick auf den komplexen Verfahrensablauf zweckmäßig mit einer automatischen Steuerung ausgestattet ist, welche die Bewegungsabläufe der einzelnen Komponenten der Anlage überwacht, koordiniert und steuert, sowie die zum Herstellen unterschiedlicher Gitterkörper notwendigen einstellbaren Parameter zur Durchführung des erfindungsgemäßen Verfahrens zum richtigen Zeitpunkt zur Verfügung stellt, wie z.B. die Gitterkörpertype, die Auswahl und Anzahl sowie den Einschießwinkel der Stegdrähte in den verschiedenen Lagen der Gitterkörper, die Schrittlänge und die Anzahl der Vorschubtakte usw.

Die erläuterten Ausführungsbeispiele können im Rahmen des allgemeinen Erfindungsgedankens, insbesondere hinsichtlich der Anzahl der hintereinandergeschalteten Stegdraht-Zuführ- und Schweißstationen, verschiedentlich abgewandelt werden.

## Patentansprüche

1. Verfahren zum Herstellen zweilagiger, kreisbogenförmig gebogener, geschweißter Gitterkörper (5,5′), die aus einander gegenüberliegenden Gittern (3a,3b) aus einander kreuzenden und an den Kreuzungspunkten verschweißten Längs- (56) und Querdrähten (55) und aus die Gitter in einem vorgegebenen gegenseitigen Abstand haltenden, an jedem Ende mit einem Draht eines der beiden Gitter verschweißten, geraden Stegdrähten (58) bestehen, bei welchem die Gitter (3a,3b) gebogen und im Abstand zueinander angeordnet werden, worauf die Stegdrähte (58) von der Gitteraußenseite her in den Zwischenraum zwischen den Gittern eingeführt und jeder Stegdraht mit den benachbarten Drähten der Gitter verschweißt wird, dadurch gekennzeichnet, daß zum Herstellen von Gitterkörpern (5,5′) in Form von Kreisringabschnitten die beiden Gitter (3a,3b) in einem der gewünschten Dicke des Gitterkörpers entsprechenden gegenseitigen Abstand konzentrisch zueinander und in vertikaler Lage entlang von konzentrischen kreisförmigen Vorschubbahnen (6) vorwärts bewegt werden, und daß nach dem vorzugsweise paarweise erfolgenden Anschweißen der Stegdrähte (58) an die Gitter (3a,3b) der fertige Gitterkörper (5,5′) von der Bahnaußenseite her entnommen wird.

2. Verfahren nach Anspruch 1, dadurch gekennzeichnet, daß die Gitter (3a,3b) in Form von vorgefertigten Gittermatten zugeführt werden, die vor ihrer Anordnung an den kreisförmigen Vorschubbahnen (6) entsprechend dem Bahnradius gebogen werden.

3. Verfahren nach Anspruch 1, dadurch gekennzeichnet, daß die Gitter (3a,3b) den Vorschubbahnen in Form von endlosen Gitterbahnen zugeführt und bei ihrer Einführung in die Vorschubbahnen (6) entsprechend dem Vorschubbahnradius gebogen werden.

4. Anlage zur Durchführung des Verfahrens nach einem der Ansprüche 1 bis 3, mit Vorschubbahnen für einander gegenüberliegende Gitter (3a,3b), einer den Vorschubbahnen (6) zugeordneten Gitterzuführstation (A), und mit einer seitlich der Vorschubbahnen angeordneten Stegdraht-Zuführstation (9) mit Stegdraht-Zuführungen (11), deren Drahtvorschubwege quer über die Vorschubbahnen (6) verlaufen, wobei jenseits der Vorschubbahnen, eingefuluchtet mit den Drahtvorschubwegen, eine Schweißzangen (42), aufweisende Schweißeinrichtung (13a,13b) für die Verschweißung der freien Drahtenden mit dem einen Gitter und diesseits der Vorschubbahnen in Vorschubrichtung nachgeschaltet eine Schweißzangen aufweisende Schweißeinrichtung zum Anschweißen der Schnittenden der Stegdrähte an das andere Gitter vorgesehen sind, dadurch gekennzeichnet, daß die Vorschubbahnen (6) entsprechend dem Biegeradius des herzustellenden Gitterkörpers kreisförmig gekrümmt sowie konzentrisch angeordnet sind und eine gemeinsame vertikale Achse aufweisen, daß die den Vorschubbahnen zugeordnete Gitterzuführstation (A) mit Biegevorrichtungen (2a, 2b) für die beiden Gitter (3a, 3b) ausgestattet ist, daß die der Gitterzuführstation (A) in Vorschubrichtung nachgeschaltete Stegdraht-Zuführstation (9) an der Außenseite der Vorschubbahnen angeordnet ist, daß die Stegdraht-Zuführstation (9) sowie die Schweißeinrichtungen (13a, 13b) an die Vorschubbahnen heran- und von diesen wegschwenkbar gelagert sind, und daß ebenfalls an der Außenseite der Vorschubbahnen eine Entnahmestation (E) für die fertigen Gitterkörper vorgesehen ist.

5. Anlage nach Anspruch 4, dadurch gekennzeichnet, daß zum Herstellen von Gitterkörpern mit unterschiedlicher Krümmung innerhalb der Gruppe von Vorschubbahnen zumindest eine weitere Gruppe kreisförmiger Vorschubbahnen mit kleinerem Radius vorgesehen ist, wobei die Vorschubbahngruppen einander im Bereich der Stegdraht-Zuführstation (9) berühren.

6. Anlage nach Anspruch 4 oder 5, dadurch gekennzeichnet, daß zur Verarbeitung von in Form endloser Gitterbahnen (3a, 3b) zugeführten Gittern an den Vorschubbahnen (6) Führungs- und Vorschubeinrichtungen (17, 17′) für die Gitterbahnen und den Gitterkörper sowie vor der Entnahmestation (E) eine Vorrichtung (20) zum Ablängen der fertigen Gitterkörper vorgesehen sind.

7. Anlage nach Anspruch 4 oder 5, dadurch gekennzeichnet, daß zur Verarbeitung von Gittern in Form von Gittermatten (3a, 3b) zumindest eine Gittermatten-Aufspannvorrichtung (7) vorgesehen ist, die auf einer die Vorschubbahnen definierenden Laufbahn (6) geführt und aus der Gitterzuführstation (A) durch die Stegdraht-Zuführ- und Schweißstationen (9; 12a, 12b) in die Gitterkörper-Entnahmestation (E) bewegbar ist.

8. Anlage nach Anspruch 7, dadurch gekennzeichnet, daß die Aufspannvorrichtung (7) einen in der Draufsicht entsprechend der kreisförmigen Laufbahn (6) gekrümmten fahrbaren Rahmen (66; 66′) aufweist und in der mitte der Laufbahn (6) eine Drehlagerung (15) für den Rahmen (66) vorgesehen ist.

9. Anlage nach den Ansprüchen 7 und 8, dadurch gekennzeichnet, daß bei Vorhandensein mehrerer kreisförmiger Laufbahnen (6₁, 6₂) die Drehlagerung (15₁, 15₂) für den Rahmen (66; 66′) der Aufspannvorrichtung (7) entlang eines Laufbahndurchmessers verstellbar ist.

10. Anlage nach einem der Ansprüche 4 bis 9, dadurch gekennzeichnet, daß die Stegdraht-Zuführstation (9) mehrere in vertikaler Richtung übereinander angeordnete und in dieser Richtung relativ zueinander verstellbare und feststellbare Stegdraht-Zuführvorrichtungen (11) aufweist, die vorzugsweise mit je zwei Stegdrahtzuführungen versehen sind, deren Stegdraht-Vorschubwege gegensinnig schräg zur Tangentialebene der Laufbahn (6) verlaufen, und daß die den Stegdraht-Zuführvorrichtungen (11) zugeordneten Schweißzangen (42) ebenfalls in vertikaler Richtung verstellbar und feststellbar angeordnet sind.

11. Anlage nach einem der Ansprüche 4 bis 10, dadurch gekennzeichnet, daß die Stegdraht-Zuführstation (9) und die Schweißstationen (12a, 12b) auf einer Grundplatte relativ zueinander und gegen die Vorschubbahnen (6) verschiebbar und vorzugsweise zwecks Anderung des Winkels, unter welchem die Stegdrähte den Vorschubbahnen zugeführt werden, um eine Vertikalachse (39 bzw. 50) verschwenkbar montiert sind.

12. Anlage nach einem der Ansprüche 4 bis 11, dadurch gekennzeichnet, daß jede der Schweißeinrichtungen (13a, 13b) im wesentlichen aus einem- Schweißzangenständer (44), den Schweißzangen (42) und den Sammelschienen (47) besteht, die in der Schweißstation (12a, 12b) mittels einer Schwenklagerung und eines Schwenkantriebes (51, 52) gegen die Gitter-Vorschubbahnen(6) verschwenkbar gelagert sind.

13. Anlage nach einem der Ansprüche 4 bis 12, dadurch gekennzeichnet, daß jeweils zwei oder mehr in Vorschubrichtung der Gitter hintereinander geschaltete Stegdraht-Zuführstationen (9) und zugeordnete Schweißstationen (12a, 12b) vorgesehen sind.

14. Anlage nach einem der Ansprüche 4 bis 13, dadurch gekennzeichnet, daß die bzw. zumindest eine Stegdraht-Zuführstation (9) mit Stegdraht-Zuführvorrichtungen ausgestattet ist, die mit vorabgelängten Stegdrähten aus einem Magazin (18) mittels eines Zubringers (19) beschickbar ist.

15. Anlage nach einem der Ansprüche 6 bis 14, dadurch gekennzeichnet, daß die Aufspannvorrichtung (7) mit einer Antriebseinrichtung (8) ausgestattet ist, welche den Antrieb von der Gitterzuführstation (A) bis zur ersten Schweißstation (12a) und von der zweiten Schweißstation (12b) in die Entnahmestation (E) sowie von dieser weiter in die Gitterzuführstation (A) bewirkt, daß das Gestell der Stegdraht-Zuführstation (9) eine weitere, mit der Aufspannvorrichtung (7) in Antriebsverbindung versetzbare Antriebseinrichtung (14) aufweist, welche den taktweisen Vorschub der Aufspannvorrichtung im wesentlichen durch die erste Schweißstation (12a) übernimmt, und daß der Rahmen der nachgeschalteten zweiten Schweißstation (12b) eine dritte Antriebseinrichtung (14′) aufweist, die mit der Aufspannvorrichtung (7) in Antriebsverbindung versetzbar ist, um diese taktweise im wesentlichen durch die zweite Schweißstation zu befördern.

16. Anlage nach einem der Ansprüche 6 bis 15, dadurch gekennzeichnet, daß am Rahmen (66; 66′) der Mattenaufspannvorrichtung (7) Positionier- und Zentriereinrichtungen (59, 61a, 61b) für die Längs- und Querdrähte der Gitter sowie Einrichtungen (62 - 65) zum Festspannen der Gitter vorgesehen sind.

## Claims

1. Process for producing two-layered welded gridworks (5,5′), which are bent in the form of an arc of a circle and comprise mutually opposite grids (3a, 3b) of longitudinal wires (56) and transverse wires (55), which cross one another and are welded at the crossing points, and straight web wires (58), which hold the grids at a predetermined distance apart and are welded at each end to a wire of one of the two grids, in which process the grids (3a, 3b) are bent and arranged at a distance from each other, whereupon the web wires (58) are introduced from the outside of the grids into the intermediate space between the grids and each web wire is welded to the neighbouring wires of the grids, characterised in that, for producing gridworks (5, 5′) in the form of annular sections, the two grids (3a, 3b) are moved forwards concentrically with respect to each other at a distance apart corresponding to the desired thickness of the gridwork and in vertical position along concentric circular advancing tracks (6), and in that, after welding the web wires (58) onto the grids (3a, 3b), preferably performed in pairs, the finished gridwork (5, 5′) is removed from outside the track.

2. Process according to Claim 1, characterised in that the grids (3a, 3b) are fed in the form of prefabricated grid mats which, before their arrangement on the circular advancing tracks (6), are bent according to the radius of the track.

3. Process according to Claim 1, characterised in that the grids (3a, 3b) are fed to the advancing tracks in the form of endless grid webs and, upon their introduction into the advancing tracks (6), are bent according to the radius of the advancing track.

4. System for carrying out the process according to one of Claims 1 to 3, with advancing tracks for mutually opposite grids (3a, 3b), a grid feeding station (A), assigned to the advancing tracks (6), and with a web-wire feeding station (9), arranged to the side of the advancing tracks, with web-wire feeds (11), the wire advancing paths of which run transversely over the advancing tracks (6), a welding device (13a, 13b), having welding tongs (42) and intended for welding the free wire ends to the one grid, being provided on the far side of the advancing tracks, aligned with the wire advancing paths, and a welding device, having welding tongs and intended for welding the cut ends of the web wires onto the other grid, being provided on the near side of the advancing tracks, downstream in the advancing direction, characterised in that the advancing tracks (6) are arranged circularly curved according to the bending radius of the gridwork to be produced and concentrically and have a common vertical axis, in that the grid feeding station (A), assigned to the advancing tracks, is equipped with bending devices (2a, 2b) for the two grids (3a, 3b), in that the web-wire feeding station (9), downstream of the grid feeding station (A) in the advancing direction, is arranged on the outside of the advancing tracks, in that the web-wire feeding station (9) and the welding devices (13a, 13b) are mounted in such a way that they can be swivelled up to the advancing tracks and away from them, and in that a removing station (E) for the finished gridworks is likewise provided on the outside of the advancing tracks.

5. System according to Claim 4, characterised in that, for producing gridworks with different curvature, within the group of advancing tracks there is provided at least one further group of circular advancing tracks of smaller radius, the advancing track groups touching one another in the region of the web-wire feeding station (9).

6. System according to Claim 4 or 5, characterised in that, for processing grids fed in the form of endless grid webs (3a, 3b), guiding and advancing devices (17, 17′) for the grid webs and the gridwork are provided on the advancing tracks (6) and a device (20) for cutting the finished gridworks to length is provided upstream of the removing station (E).

7. System according to Claim 4 or 5, characterised in that, for processing grids in the form of grid mats (3a, 3b), at least one grid-mat mounting device (7) is provided, which is guided on a running track (6), defining the advancing tracks, and is able to be moved out of the grid feeding station (A) through the web-wire feeding and welding stations (9; 12a, 12b) into the gridwork removing station (E).

8. System according to Claim 7, characterised in that the mounting device (7) has a mobile frame (66; 66′), curved in plan view according to the circular running track (6), and a rotary mount (15) for the frame (66) is provided in the centre of the running track (6).

9. System according to Claims 7 and 8, characterised in that, with the existence of a plurality of circular running tracks (6₁, 6₂), the rotary mount (15₁, 15₂) for the frame (66; 66′) of the mounting device (7) can be adjusted along a running track diameter.

10. System according to one of Claims 4 to 9, characterised in that the web-wire feeding station (9) has a plurality of web-wire feeding devices (11) which are arranged one above the other in the vertical direction, can be adjusted in this direction in relation to one another and fixed and are preferably provided with two web-wire feeds each, the web-wire advancing paths of which run oppositely at an angle to the tangential plane of the running track (6), and in that the welding tongs (42) assigned to the web-wire feeding devices (11) are likewise arranged in such a way that they can be adjusted in the vertical direction and fixed.

11. System according to one of Claims 4 to 10, characterised in that the web-wire feeding station (9) and the welding stations (12, 12b) are fitted in such a way that they can be displaced on a base plate in relation to one another and towards the advancing tracks (6) and preferably in such a way that they can be swivelled about a vertical axis (39 and 50, respectively) for the purpose of changing the angle at which the web wires are fed to the advancing tracks.

12. System according to one of Claims 4 to 11, characterised in that each of the welding devices (13a, 13b) essentially comprises a welding tongs stand (44), the welding tongs (42) and the collecting rails (47), which are mounted in the welding station (12a, 12b) in such a way that they can be swivelled by means of a swivel mounting and a swivel drive (51, 52) towards the grid advancing tracks (6).

13. System according to one of Claims 4 to 12, characterised in that in each case two or more web-wire feeding stations (9), arranged one after the other in the advancing direction of the grids, and assigned welding stations (12a, 12b) are provided.

14. System according to one of Claims 4 to 13, characterised in that the, or at least one, web-wire feeding station (9) is equipped with web-wire feeding devices which can be charged with previously cut-to-length web wires from a magazine (18) by means of a follower (19).

15. System according to one of Claims 6 to 14, characterised in that the mounting device (7) is equipped with a drive device (8) which effects the drive from the grid feeding station (A) up to the first welding station (12a) and from the second welding station (12b) into the removing station (E) as well as from the latter on into the grid feeding station (A), in that the rack of the web-wire feeding station (9) has a further drive device (14) which can be put into drive connection with the mounting device (7) and assumes the intermittent advancement of the mounting device essentially through the first welding station (12a), and in that the frame of the downstream second welding station (12b) has a third drive device (14′), which can be put into drive connection with the mounting device (7) in order to transport the latter intermittently essentially through the second welding station.

16. System according to one of Claims 6 to 15, characterised in that positioning and centring devices (59, 61a, 61b) for the longitudinal and transverse wires of the grids as well as devices (62 - 65) for firmly clamping the grids are provided on the frame (66; 66′) of the mat mounting device (7).

## Revendications

1. Procédé pour la fabrication de corps de treillis soudés, cintrés en arc de cercle à deux couches (5, 5′) qui consistent en des treillis opposés (3a, 3b) de fils longitudinaux (56) et transversaux (55) se croisant et soudés sur les points de croisement et en des fils d'espacement (58) droits soudés maintenant le treillis à une distance réciproque prédéterminée, sur chaque extrémité avec un fil de l'un des deux treillis, procédé dans lequel les treillis (3a, 3b) sont agencés de façon cintrée et à une certaine distance entre eux, les fils d'espacement (58) à partir du côté extérieur de treillis étant introduits dans l'espace intermédiaire entre les treillis et chaque fil d'espacement étant soudé avec les fils avoisinants des treillis, caractérisé en ce que pour la fabrication de corps de treillis (5, 5′) sous forme de sections d'anneaux de cercle, les deux treillis (3a, 3b) sont avancés concentriquement l'un vers l'autre à une distance réciproque correspondant à l'épaisseur souhaitée du corps du treillis et dans la position verticale le long de voies d'avance (6) en arc de cercle concentrique et en ce qu'après le soudage, effectué de préférence par paires, des fils d'espacement (58) sur les treillis (3a, 3b), on enlève le corps de treillis terminé (5, 5′) du côté extérieur de la voie.

2. Procédé selon la revendication 1, caractérisé en ce que les treillis (3a, 3b) sont amenés sous forme de nappes de treillis préfabriquées, lesquelles avant leur agencement sur les voies d'avance circulaires sont cintrées en fonction du rayon de la voie.

3. Procédé selon la revendication 1, caractérisé en ce que les treillis (3a, 3b) sont amenés aux voies d'avance sous forme de nappes de treillis sans fin et sont cintrés lors de leur introduction dans les voies d'avance (6) en fonction du rayon de la voie d'avance.

4. Installation pour la réalisation du procédé selon l'une des revendications 1 à 3, avec des voies d'avance pour des treillis opposés ou situés en regard les uns des autres (3a, 3b) d'un poste d'amenée de treillis affecté aux voies d'avance (6) et avec un poste d'amenée de fils d'espacement (9) agencé latéralement par rapport aux voies d'avance avec des amenées de fils d'espacement (11) dont les trajets d'avance de fils s'étendent transversalement au-dessus des voies d'avance (6), de l'autre côté des voies d'avance, en alignement sur les trajets d'avance de fils, est prévue une installation de soudage (13a, 13b) comportant des pinces de soudage (42) pour le soudage des extrémités de fils libres avec l'un des treillis et du côté des voies d'avance dans la direction d'avance est prévue une installation de soudage comportant des pinces de soudage pour le soudage des extrémités de coupe des fils d'espacement sur l'autre treillis, caractérisé en ce que les voies d'avance (6) sont courbées circulairement par rapport au rayon de courbure du corps de treillis à fabriquer et elles sont agencées concentriquement et comportent un axe vertical commun, en ce que le poste d'amenée de treillis (A) affecté aux voies d'avance comporte des dispositifs de cintrage (2a, 2b) pour les deux treillis (3a, 3b), en ce que le poste d'amenée de fils d'espacement (9) en amont du poste d'amenée de treillis (A) dans la direction d'avance est agencé sur le côté extérieur des voies d'avance, en ce que le poste d'amenée de fils d'espacement (9) ainsi que les installations de soudage (13a, 13b) sont montés de façon basculable en rapprochement et en éloignement par rapport aux voies d'avance et en ce qu'également sur le côté extérieur des voies d'avance il est prévu un poste de déchargement (E) pour les corps de treillis terminés.

5. Installation selon la revendication 4, caractérisée en ce que pour la fabrication de corps de treillis de courbure différente à l'intérieur du groupe de voies d'avance, il est prévu au moins un groupe supplémentaire de voies d'avance circulaires avec un plus petit rayon, les groupes de voies d'avance se touchant dans la zone du poste d'amenée de fils d'espacement (9).

6. Installation selon la revendication 4 ou 5, caractérisé en ce que pour le traitement de treillis amenés sous la forme de nappes de treillis sans fin (3a, 3b) sur les voies d'avance (6) sont prévues des installations de guidage et d'avance (17, 17′) pour les nappes de treillis et le corps de treillis et en amont du poste de déchargement (E) il est prévu un dispositif (20) pour la coupe à longueur des corps de treillis terminés.

7. Installation selon la revendication 4 ou 5, caractérisée en ce que pour le traitement de treillis sous forme de nappes de treillis (3a, 3b) il est prévu au moins un dispositif de blocage de nappes de treillis (7) qui est guidé sur une trajectoire (6) définissant les voies d'avance et qui peut se déplacer à partir du poste d'amenée de treillis (A) à travers les postes de soudage et d'amenée de fils d'espacement (9 ; 12a, 12b) jusque dans le poste de déchargement de corps de treillis (E).

8. Installation selon la revendication 7, caractérisée en ce que le dispositif de blocage (7) présente un châssis mobile (66, 66′) courbé en vue de dessus et correspondant à la trajectoire circulaire (6) et en ce qu'au milieu de la trajectoire (6) il est prévu un logement rotatif (15) pour le châssis (66).

9. Installation selon les revendications 7 et 8, caractérisée en ce qu'en cas de présence de plusieurs trajectoires circulaires (6₁, 6₂) le logement rotatif (15₁, 15₂) pour le châssis (66, 66′) du dispositif de blocage (7) est réglable le long d'un diamètre de trajectoire.

10. Installation selon l'une des revendications 4 à 9, caractérisée en ce que le poste d'amenée de fils d'espacement (9) comporte plusieurs dispositifs d'amenée de fils d'espacement (11) superposés dans la direction verticale et réglables et immobilisables l'un par rapport à l'autre dans cette direction, et qui sont de préférence chaque fois munis de deux guidages de fils d'espacement dont les trajets d'avance de fils d'espacement s'étendent en sens inverse transversalement par rapport au plan tangentiel de la trajectoire (6) et en ce que les pinces de soudure affectées au dispositif d'amenée de fils d'espacement (11) sont également agencées de façon réglable et immobilisable dans la direction verticale.

11. Installation selon l'une des revendications 4 à 10, caractérisée en ce que le poste d'amenée de fils d'espacement (9) et les postes de soudure (12a, 12b) sont mobiles sur une embase l'un par rapport à l'autre et en opposition aux voies d'avance (6) et de préférence en vue de la modification de l'angle, selon lequel les fils d'espacement sont amenés aux voies d'avance et ils sont montés de façon basculable par rapport à un axe vertical (39 ou 50).

12. Installation selon l'une des revendications 4 à 11, caractérisée en ce que chacune des installations de soudage (13a, 13b) consiste essentiellement en un support de pinces de soudage (44), en pinces de soudage (42) et en barres collectrices (47) qui sont montés de façon basculable au moyen d'un logement basculable et d'un entraînement de basculement (51, 52) en opposition aux voies d'avance de treillis (6).

13. Installation selon l'une des revendications 4 à 12, caractérisée en ce que sont prévus chaque fois deux ou plusieurs postes d'amenée de fils d'espacement (9) montés en série dans la direction d'avance des treillis et des postes de soudure affectés (12a, 12b).

14. Installation selon l'une des revendications 4 à 13, caractérisée en ce que les postes d'amenée de fils d'espacement ou au moins un poste d'amenée de fils d'espacement (9) est équipé de dispositif d'amenée de fils d'espacement qui peut être alimenté en fils d'espacement précoupés à la longueur à partir d'un magasin (18) au moyen d'un distributeur (19).

15. Installation selon l'une des revendications 6 à 14, caractérisée en ce que le dispositif de blocage (7) est muni d'un système d'entraînement (8) qui actionne l'entraînement du poste d'amenée de treillis (A) jusqu'au premier poste de soudage (12a) et à partir du deuxième poste de soudage (12b) au poste de déchargement (E) ainsi qu'à partir de celui-ci dans le poste d'amenée de treillis (A) en ce que le châssis du poste d'amenée de fils d'espacement (9) comporte un dispositif d'entraînement supplémentaire déplaçable avec le dispositif de blocage (7) en liaison d'entraînement qui prend en charge l'amenée en pas-à-pas du dispositif de blocage essentiellement à travers le premier poste de soudage (12a) et en ce que le châssis du deuxième poste de soudage en aval (12b) comporte un troisième dispositif d'entraînement (14′) qui est déplaçable avec le dispositif de blocage (7) en liaison d'entraînement pour acheminer celui-ci en pas-à-pas essentiellement à travers le deuxième poste de soudage.

16. Installation selon l'une des revendications 6 à 15, caractérisée en ce qu'au niveau du châssis (66, 66′) du dispositif de blocage de nappes (7) sont prévus des systèmes de positionnement et de centrage (59, 61a, 61b) pour les fils longitudinaux et transversaux des treillis ainsi que des systèmes (62 - 65) pour le bridage des treillis.
